# EUROPÄISCHE PATENTSCHRIFT

(11) **EP 0 761 381 B1**
(45) Veröffentlichungstag und Bekanntmachung des Hinweises auf die Patenterteilung: **25.08.1999**
(21) Anmeldenummer: 96111150.7
(22) Anmeldetag: 11.07.1996
(51) Int. Cl.: B23Q 1/26, F16C 33/60

(54) **Drehtisch mit Schrittantrieb**
Turntable with stepped drive
Table rotative commandée pas à pas

(30) Priorität: 07.09.1995 DE 29514343 U
(43) Veröffentlichungstag der Anmeldung: 12.03.1997
(73) Patentinhaber: EXPERT Maschinenbau GmbH, D-64653 Lorsch (DE)
(72) Erfinder: Liebzeit, H.J., Dipl.-Ing., 64653 Lorsch (DE)
(74) Vertreter: Helber, Friedrich G., Dipl.-Ing.

(56) Entgegenhaltungen:
- WO-A-94/22637
- DE-A- 2 446 531
- DE-U- 8 703 335
- US-A- 3 975 067

## Beschreibung

Die Erfindung betrifft einen Drehtisch mit Schrittantrieb mit einer durch Wälzlager drehbar auf der Oberseite eines Gehäuses gelagerten Tischplatte, von deren Unterseite mehrere, in gleichmäßigen Winkelabständen versetzt auf dem gleichen Durchmesser angeordnete Abtriebsbolzen vortreten, welche in eine Steuernut in einer im Gehäuse gelagerten, motorisch antreibbaren Antriebswalze eingreifen, wobei der Verlauf der Steuernut die Charakteristik der Drehbewegung der Tischplatte bestimmt, die kreisförmig begrenzt ist und einen Durchmesser hat, der größer ist als der zugeordnete obere, ebenfalls kreisförmig begrenzte, den Lagerbereich bildende Bereich des Gehäuses,und in dem das Gehäuse radial überragenden Bereich in ihrer Dicke in Abwärtsrichtung derart verstärkt ist, daß sie den Lagerbereich des Gehäuses in Abwärtsrichtung teilweise umgreift, und an der nach unten weisenden Fläche des das Gehäuse im Lagerbereich nach unten umgreifenden Tischplatten-Randbereichs ein Lagerring durch in im wesentlichen in gleichmäßigen Winkelabständen vorgesehene Befestigungsschrauben lösbar befestigt ist, wobei in der radial nach außen weisenden Wand des Gehäuses im Lagerbereich die von zwei in Höhenrichtung beabstandeten, in eine Nut im oberen Lagerbereich des Gehäuses angeordneten Drahtringen aus gehärtetem Stahldraht gebildeten gehäuseseitigen Laufbahnen des Wälzlagers für die Tischplatte und in der den Laufbahnen im Gehäuse gegenüberliegenden Innenfläche der Tischplatte und des Lagerrings die Laufbahnen für die tischplattenseitige Lagerung der Wälzkörper ausgebildet sind, welche von zwei in Höhenrichtung beabstandeten Drahtringen aus gehärtetem Stahldraht gebildet sind, die in einer teilweise in der gehäusezugewandten Innenseite des ringförmig überragenden Randbereichs der Tischplatte und teilweise im Lagerring ausgebildeten Nut angeordnet sind,

Schrittangetriebene Drehtische werden auf vielen Gebieten der industriellen Technik eingesetzt, wenn z.B. Werkstücke taktweise aufeinanderfolgend verschiedenen Bearbeitungsstationen zugeführt, während der Bearbeitung gehalten und dann in die nächstfolgende Bearbeitungsstation geführt werden müssen, wobei die Bearbeitungsstationen in gleichmäßigen Winkelabständen um den Drehtisch herum angeordnet sind. Die Halterungseinrichtungen oder Greifer für die Werkstücke werden dabei auf der schrittweise angetriebenen Tischplatte des Drehtischs montiert, welche zur Erzielung einer hohen Genauigkeit möglichst spielfrei und hochbelastbar auf dem Drehtisch-Gehäuse gelagert werden muß. Hierfür finden, zumindest bei größeren Einheiten, in der Regel sogenannte Drahtkugellager Verwendung, bei denen die Wälzkugeln auf gehärteten Drahtringen aus Stahldraht abrollen, welche also die Laufbahnen des Kugellagers bilden. Solche Drahtkugellager haben sich für hochbelastete Drehlagerungen großen Durchmessers bewährt.Ursprünglich war die Ausgestaltung so getroffen, daß die kreisförmig begrenzte Tischplatte an ihrem Außenumfang mit einer umlaufenden Nut zur Aufnahme der beiden, die tischplattenseitigen Laufbahnen des Drahtlagers bildenden Drahtringe versehen war, während die die gehäuseseitigen Laufbahnen bildenden Drahtringe in der Wandung einer den Umfang des Drehtischs aufnehmenden Aussparung des Gehäuses einerseits und der tischplattenzugewandten Umfangswandung eines stirnseitig auf das Gehäuse aufgeschraubten Lager-Halterungs- und Einstellrings angeordnet waren. Die Demontage des Halterungs- und Einstellrings durch Abschrauben vom Gehäuse erlaubt dann auch die Demontage des Lagers und das Abheben der Drehplatte vom Drehtisch-Gehäuse, wobei auch die Einstellung des Lagerspiels durch Beilegen von Distanzscheiben in den Spalt zwischen der Gehäuse-Stirnfläche und der zugewandten Fläche des Halterungs- und Einstellrings möglich ist. Festzuhalten ist jedenfalls, daß die Tischplatte des Drehtischs weitgehend versenkt innerhalb des sie außen umgebenden Lagerbereichs des Gehäuses und des auf diesem aufgeschraubten Halterungs- und Einstellring angeordnet war. Somit ist der Durchmesser der Tischplatte und somit auch des Drahtlagers durch die horizontalen Abmessungen des Gehäuses im Lagerbereich vorgegeben. Zwischen dem Halterungs- und Einstellring und dem Umfang der Tischplatte besteht außerdem ein gewisser - wenn auch geringer - Spalt, durch den Schmutzteilchen und andere Verunreinigungen, wie Bearbeitungsspäne, Bohr- und Kühlflüssigkeit o.dgl. eindringen können. Bei Anwendungsfällen, bei denen diese Gefahr besteht, muß dieser Spalt also zusätzlich in geeigneter Weise abgedeckt oder abgedichtet werden. Bei in der eingangs erwähnten Art weitergebildeten, bekannten Drehtischen (WO-A-94 22 637) werden diese Nachteile vermieden. Da die Dreh-Tischplatte das Gehäuse radial überragt, ist ein das Eindringen von Schmutz oder unerwünschten Flüssigkeiten zum Lager ermöglichender Spalt nicht mehr vorhanden. Der Spalt ist vielmehr an die Unterseite der Tischplatte zwischen den dort an der Tischplatte befestigten Lagerring und das Gehäuse verlegt. Da gleichzeitig auch der Lagerdurchmesser gegenüber dem Durchmesser der Lager bei der älteren Drehtischausgestaltung vergrößert ist, wird eine erhöhte Tragfähigkeit des Lagers, d.h. Belastbarkeit der Tischplatte, erreicht, da einerseits der Hebelarm der Abstützung bei Belastung günstiger ist und andererseits das im Durchmesser vergrößerte Lager die Last über eine größere Anzahl von Wälzkörpern abstützt, wobei ein zusätzlicher Vorteil darin besteht, daß das Kugellager unter Last einstellbar bzw. nachstellbar ist. Hierdurch wird der Aufwand für ein Nachstellen des Kugellagers im Betrieb wesentlich reduziert, da Aufbauten auf dem Drehtisch, z.B. eine auf dem Drehtisch befestigte Werkzeugplatte oder Einzelwerkzeuge, nicht mehr abmontiert und nach der Neueinstellung wieder aufgebaut werden müssen. Hierdurch ergibt sich eine beträchtliche Verminderung der Ausfallzeiten. Der in der geschilderten Form weiterentwikkelte Drehtisch hat deshalb auch sofort nach Verfügbarkeit großes Interesse gefunden. Beim Einsatz dieser Drehtische in der Praxis wurden Fälle beobachtet, bei denen nach der Montage bzw. einer Demontage und nachfolgenden Wiedermontage des Drehtischs - im Vergleich zu den vorbeschriebenen älteren Drehtischen - eine verringerte Plan- und Rundlauf-Genauigkeit auftrat. Bei der Untersuchung des Problems wurde festgestellt, daß diese Ungenauigkeiten auf eine Verformung der Tischplatte in dem Bereich, in welchem der untere Laufring des Drahtkugellagers bei der (Wieder-) Montage zuletzt mit dem über das Gehäuse vortretenden Teil des Drehtischs verschraubt wird, zurückzuführen sind. Der Laufring ist so steif, daß die von ihm über die Befestigungsschrauben auf den Drehtisch ausgeübten Kräfte in diesem Bereich zu einer - wenn auch geringfügigen - Verformung in dem unmittelbar an den äußeren, das Gehäuse überragenden Bereich anschließenden Bereich des Drehtischs führten.

Der Erfindung liegt die Aufgabe zugrunde, Drehtische der hier in Frage stehenden Art so weiterzubilden, daß die beobachteten Plan- und Rundlauf-Ungenauigkeiten nicht mehr auftreten.

Erfindungsgemäß wird diese Aufgabe bei einem Drehtisch der eingangs erwähnten Art dadurch gelöst, daß der Lagerring zumindest in einem Teilbereich seines Umfangs durch einen Schlitz in senkrechter, zur Drehachse der Tischplatte paralleler Richtung leichter verformbar ausgebildet ist, als der diesem Teilbereich gegenüberliegende, in Radialrichtung an den in Abwärtsrichtung verstärkten Randbereich anschließende Bereich der Tischplatte. Es hat sich gezeigt, daß die beobachteten Lauf-Ungenauigkeiten dadurch vollständig zum Verschwinden gebracht werden, wenn bei der Montage darauf geachtet wird, daß die Verschraubung des Laufrings mit der Tischplatte zuletzt in dem leichter verformbar ausgebildeten Laufring-Bereich erfolgt.

Es ist bekannt, die Lagerringe eines Kugellagers (US-A-3 975 009) bzw. den äußeren Lagerring eines Nadellagers (DE-A-2 446 531) mit einem entweder geradlinig schräg oder pfeilförmig durch den Lagerring verlaufenden Schlitz zu versehen. Diese Schlitze in den Lagerringen dienen aber dazu, die Lagerringe in Radialrichtung durchmesserveränderlich auszubilden, um sie in der zugeordneten Aufnahmenut montieren zu können (US-A-3 975 009) bzw. die thermischen Durchmesseränderungen des Lagersitzes des drehbar gelagerten Bauteils, welches im speziellen Fall eine Führungswalze einer Stranggußanlage ist (DE-A-2 446 531) auszugleichen. Eine axiale Verformung der Lagerringe parallel zur Drehachse des drehbar gelagerten Bauteils wird bei den bekannten Lagerringen nicht gefordert und ist deshalb in den genannten Druckschriften auch nicht angesprochen.

Der Schlitz, der den Lagerring entweder ganz oder auch nur teilweise durchtrennen kann, wird bevorzugt radial verlaufend angeordnet, da er so am einfachsten herstellbar ist.

Um zu verhindern, daß durch den Schlitz Verunreinigungen in das Drahtkugellager übertreten können, wird der Schlitz dann mit einer gummielastischen Masse ausgefüllt, die z.B. von einem in fließfähigem Zustand eingebrachten, elastisch abbindenden Kunststoff gebildet wird.

Die Erfindung ist in der folgenden Beschreibung eines Ausführungsbeispiels in Verbindung mit der Zeichnung näher erläutert, und zwar zeigt:
- Fig. 1: eine teilweise aufgeschnittene perspektivische Ansicht eines erfindungsgemäßen Drehtischs mit Schrittantrieb;
- Fig. 2: eine Seitenansicht des Drehtischs, gesehen in Richtung des Pfeils 2 in Fig.1;
- Fig. 3: eine - teilweise - in einer horizontalen, durch das Gehäuse gelegten Ebene geschnittene Draufsicht des Drehtischs, gesehen in Richtung des Pfeils 3 in Fig. 2;
- Fig. 4: eine teilweise geschnittene Ansicht des Drehtischs, gesehen in Richtung der Pfeile 4a-4a, wobei der nicht geschnittene Bereich zusätzlich, gesehen in Richtung der Pfeile 4b-4b teilweise geschnitten ist;
- Fig. 5: eine vergrößerte Schnittansicht der in Fig. 4 innerhalb des strichpunktierten Kreises 5 gelegenen Schnittansicht des Lagerbereichs der Tischplatte auf dem Gehäuse; und
- Fig. 6: eine der Fig. 5 entsprechende Schnittansicht des Lagerbereichs der Tischplatte auf dem Gehäuse in einer in Umfangsrichtung versetzten Lage, in welcher der an der Unterseite der Tischplatte vorgesehene äußere Lagerring geschlitzt ist.

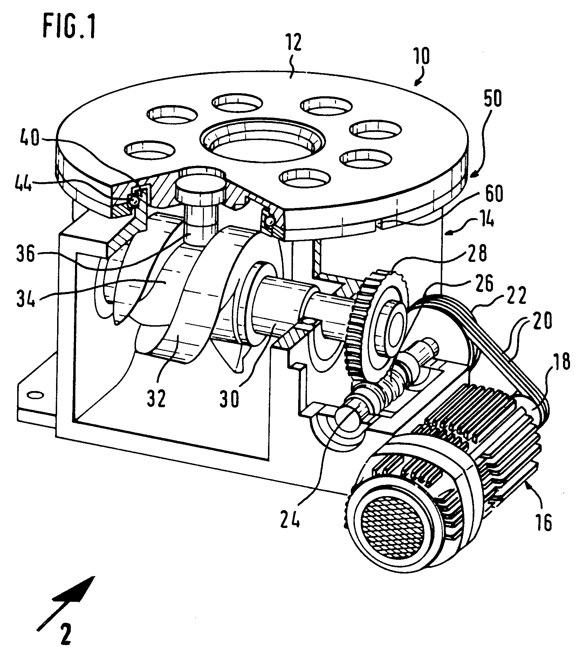

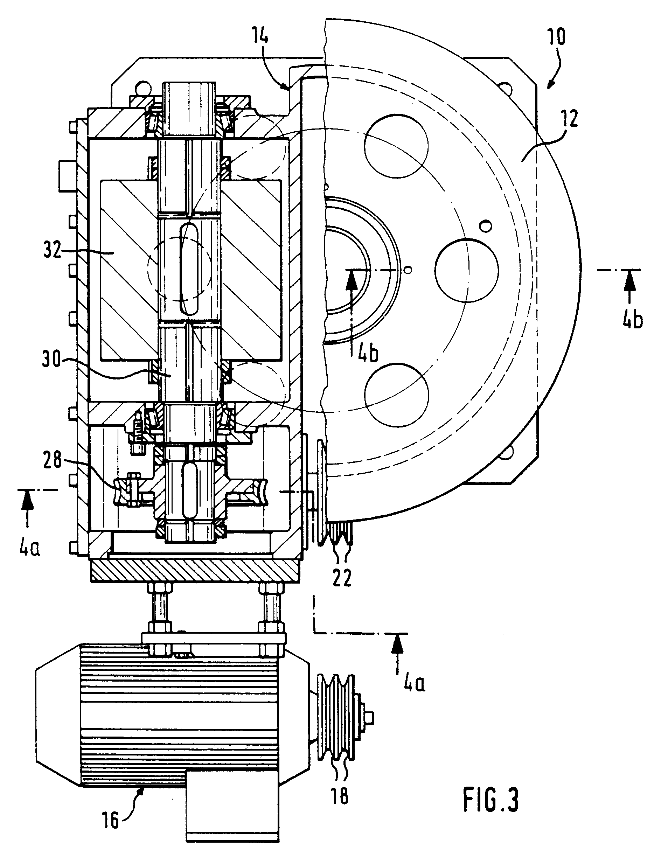

Der in den Fig. 1 bis 4 gezeigte, in seiner Gesamtheit mit 10 bezeichnete Drehtisch weist eine an der Oberseite im wesentlichen ebenflächige, kreisförmig begrenzte Tischplatte 12 auf, die - in der im folgenden noch beschriebenen Weise - auf der Oberseite eines Gehäuses 14 drehbar und durch einen außen am Gehäuse 14 angebauten Elektromotor 16 antreibbar ist. Auf der Welle des Elektromotors 16 sind Keilriemenräder 18 mit relativ geringem Durchmesser befestigt, welche über Keilriemen 20 Keilriemenräder 22 größeren Durchmessers antreiben. Die Keilriemenräder 22 sind auf dem einen aus dem Gehäuse 14 herausgeführten Ende einer im Gehäuse drehbar gelagerten Welle 24 drehfest gehaltert. Die Welle 24 trägt die Schnecke 26 eines als Vorgelege dienenden Schneckengetriebes, dessen mit der Schnecke 26 kämmendes Schneckenrad 28 am Ende einer im Gehäuse gelagerten horizontalen Welle 30 angeordnet ist, die ihrerseits eine Antriebswalze 32 trägt, in deren grundsätzlich zylindrischer Umfangsfläche eine Antriebsnut 34 eingearbeitet ist, in welche - bei angetriebenem Motor 16 - aufeinanderfolgend jeweils ein von der Tischplatte 12 nach unten ins Gehäuse 14 vorstehender Rollenbolzen 36 von einer Schar von in gleichmäßigen Winkelabständen auf einem gemeinsamen Durchmesser angeordneten Rollenbolzen 36 eingreift. Die Länge der Antriebsnut 34 in der Antriebswalze 32 ist so bemessen, daß bei laufendem Motor 16 ein in die Antriebsnut 34 eingeführter und dann bei der weiteren Drehung der Antriebswalze mitgenommener Rollenbolzen 36 gerade an einer Stirnseite der Antriebswalze 32 aus der Antriebsnut 34 austritt, wenn der nächstfolgende Rollenbolzen 36 auf der gegenüberliegenden Stirnseite in die Antriebsnut 32 eintritt. Die Bewegungscharakteristik der Tischplatte während des Durchtritts eines Rollenbolzens durch die Antriebsnut hängt vom Verlauf, d.h. der jeweiligen Steigung der Antriebsnut 34 ab. Dabei können Stillstandsperioden - bei Eingreifen des Rollenbolzens in einen in Umfangsrichtung verlaufenden Nutabschnitt - , Beschleunigungs- und Verzögerungsperioden und Perioden konstanter Geschwindigkeit - bei Eingreifen des Rollenbolzens in einen Nutabschnitt mit konstanter Steigung - aufeinanderfolgen. Bei dem in Fig. 1 gezeigten Drehtisch 10 weist die Tischplatte 12 acht Rollenbolzen auf, so daß die Tischplatte bei einer vollen Umdrehung als beispielsweise insgesamt achtmal von Null auf eine konstante Geschwindigkeit beschleunigt und dann wieder auf Null verzögert, d.h. zum Stillstand gebracht wird, wobei die Stillstandsphase, in welcher beispielsweise die Bearbeitung von Werkstücken in verschiedenen um den Drehtisch herum angeordneten Bearbeitungsstationen erfolgt oder auch Werkstükke in Aufnahmen in einer auf der Tischplatte befestigten Werkzeugplatte übernommen bzw. aus ihnen ausgetragen werden, durch Abschalten des Antriebsmotors verlängert werden kann. Die Tischplatte dreht sich also schrittweise insgesamt achtmal und fährt dabei in den Stillstandsperioden exakt die zugeordnete Bearbeitungs- oder Werkstückübernahme- bzw. Austrageposition an.

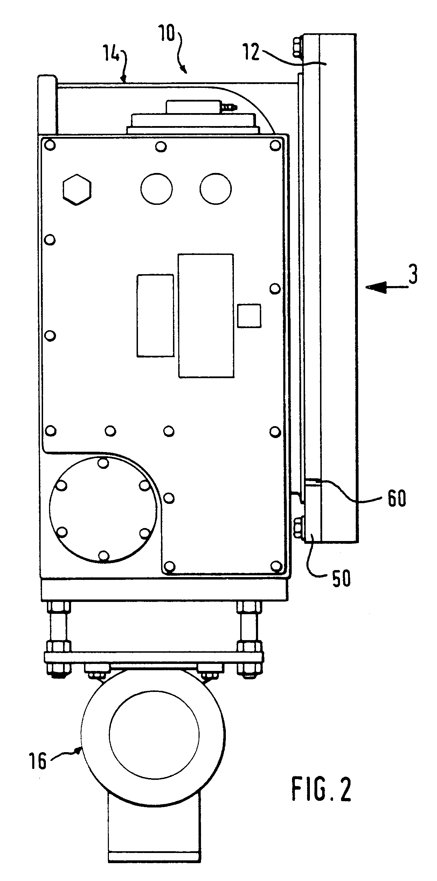

In den Fig. 2 bis 4 ist gegenüber dem in Fig. 1 dargestellten Drehtisch eine Änderung dahingehend dargestellt, daß dort nur 6 Rollenbolzen vorgesehen sind, so daß die Tischplatte also für eine volle Umdrehung 6 Schritte ausführt.

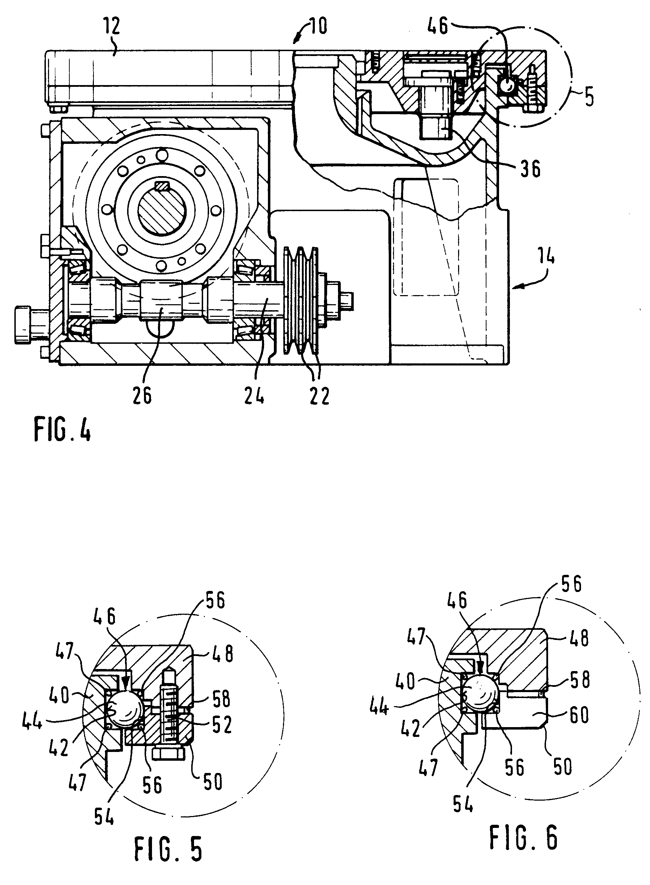

Die Lagerung der Tischplatte 12 auf dem Gehäuse 14 ist in den Fig. 1 und 4 und insbesondere in Fig. 5 und 6 veranschaulicht. Das Gehäuse 14 weist in seinem oberen, die Tischplatte 12 lagernden Bereich einen in der Draufsicht kreisförmig begrenzten, nach oben vorstehenden Lagerabschnitt 40 auf, in dessen äußerer Umfangsfläche eine Nut 42 eingestochen ist, welche die gehäuseseitig als Laufbahnen für die Lagerkugeln 44 eines Drahtkugellagers 46 dienenden gehärteten Drahtringe 47 aus Stahldraht aufnimmt.

Der im Durchmesser größer als der Außendurchmesser des Lagerabschnitts 40 des Gehäuses 14 bemessene Drehtisch 12 ist in seinem den Lagerabschnitt radial überragenden Bereich in seiner Dicke in Abwärtsrichtung verstärkt, so daß dort ein äußerer umlaufender Randbereich 48 entsteht, der etwa die obere Hälfte des Gehäuse-Lagerabschnitts 40 in Höhenrichtung überdeckt. Gegen die nach unten weisende Stirnfläche des äußeren Randbereichs 48 der Tischplatte 12 ist ein Lagerring 50 mittels Befestigungsschrauben 52 geschraubt, der in Höhenrichtung zusätzlich etwa die untere Hälfte des Lagerabschnitts 40 des Gehäuses 14 überdeckt. In der zum Lagerabschnitt 40 gewandten Innenfläche des Randbereichs 48 und des Lagerrings 50 ist - je etwa zur Hälfte - eine zur Nut 42 fluchtende Nut 54 eingearbeitet, welche die die tischplattenseitigen Laufbahnen der Lagerkugeln 44 des Drahtkugellagers 46 bildenden Drahtringe 56 aufnimmt, wobei einer der Drahtringe 56 in dem im Randbereich 48 der Tischplatte 12 und der andere in dem im Lagerring 50 ausgebildeten Teil der Nut 54 angeordnet ist. Der Lagerring 50 wird über dünne ringförmige Beilagescheiben 58 an die untere Stirnfläche des Randbereichs 48 der Tischplatte 12 geschraubt, wobei durch Verwendung unterschiedlich dicker Beilagescheiben eine weitgehend spielfreie Lagerung der Tischplatte 12 auf dem Lagerabschnitt 40 des Gehäuses 14 eingestellt werden kann, ohne daß hierfür die Demontage der Tischplatte 12 nötig wäre. Zur Demontage der Tischplatte 12 wird die Schraubverbindung des Lagerrings 50 mit der Tischplatte gelöst, worauf die Tischplatte nach oben abhebbar ist.

Der Lagerring 50 ist, wie in Figur 1 angedeutet, mit einem radialen Schlitz 60 versehen, der - wie die in der Ebene des Schlitzes geschnittene vergrößerte Ansicht des Lagerbereichs der Tischplatte gemäß Figur 6 zeigt - den Lagerring ganz durchtrennt. Es hat sich gezeigt, daß durch diese Ausgestaltung Plan- und Rundlauf-Ungenauigkeiten der Tischplatte 12 vermieden werden, wenn die in Umfangsrichtung an den Schlitz anschließenden Befestigungsschrauben 52 bei der Montage der Tischplatte 12 auf dem Gehäuse 14 zuletzt angezogen werden. Der Schlitz 60 selbst wird dann zweckmäßig noch mit einer - in den Zeichnungsfiguren nicht gezeigten - gummielastisch abbindenden Masse ausgespritzt, um Verunreinigungen des Drahtkugellagers auszuschließen.

Es ist ersichtlich, bei der beschriebenen Lageranordnung eine Verschmutzung der Lager durch von oben eintretende Partikel oder Flüssigkeiten nicht möglich ist. Außerdem ist das Kugellager ohne Demontage einer eventuell auf der Tischplatte befestigten Werkzeugplatte oder von Einzelwerkzeugen von außen unter Last einstellbar.

## Patentansprüche

1. Drehtisch (10) mit Schrittantrieb mit einer durch Wälzlager drehbar auf der Oberseite eines Gehäuses (14) gelagerten Tischplatte (12), von deren Unterseite mehrere, in gleichmäßigen Winkelabständen versetzt auf dem gleichen Durchmesser angeordnete Abtriebsbolzen (36) vortreten, welche in eine Steuernut (34) in einer im Gehäuse (14) gelagerten, motorisch antreibbaren Antriebswalze (32) eingreifen, wobei der Verlauf der Steuernut (34) die Charakteristik der Drehbewegung der Tischplatte (12) bestimmt, die kreisförmig begrenzt ist und einen Durchmesser hat, der größer ist als der zugeordnete obere, ebenfalls kreisförmig begrenzte, den Lagerbereich (40) bildende Bereich des Gehäuses (14), und in dem das Gehäuse radial überragenden Bereich (48) in ihrer Dicke in Abwärtsrichtung derart verstärkt ist, daß sie den Lagerbereich (40) des Gehäuses (14) in Abwärtsrichtung teilweise umgreift, und an der nach unten weisenden Fläche des das Gehäuse (14) im Lagerbereich nach unten umgreifenden Tischplatten-Randbereichs (48) ein Lagerring (50) durch im wesentlichen in gleichmäßigen Winkelabständen vorgesehene Befestigungsschrauben (52) lösbar befestigt ist, wobei in der radial nach außen weisenden Wand des Gehäuses (14) im Lagerbereich (40) die von zwei in Höhenrichtung beabstandeten, in eine Nut (42) im oberen Lagerbereich (40) des Gehäuses (14) angeordneten Drahtringen (47) aus gehärtetem Stahldraht gebildeten gehäuseseitigen Laufbahnen des Wälzlagers (46) für die Tischplatte (12) und in der den Laufbahnen im Gehäuse (14) gegenüberliegenden Innenfläche der Tischplatte (10) und des Lagerrings (50) die Laufbahnen für die tischplattenseitige Lagerung der Wälzkörper ausgebildet sind, welche von zwei in Höhenrichtung beabstandeten Drahtringen (56) aus gehärtetem Stahldraht gebildet sind, die in einer teilweise in der gehäusezugewandten Innenseite des ringförmig überragenden Randbereichs (48) der Tischplatte (12) und teilweise im Lagerring (50) ausgebildeten Nut (54) angeordnet sind,
**dadurch gekennzeichnet**,
daß der Lagerring (50) zumindest in einem Teilbereich seines Umfangs durch einen Schlitz (60) in senkrechter, zur Drehachse der Tischplatte (12) paralleler Richtung leichter verformbar ausgebildet ist, als der diesem Teilbereich gegenüberliegende, in Radialrichtung an den in Abwärtsrichtung verstärkten Randbereich (48) anschließende Bereich der Tischplatte (12).

2. Drehtisch nach Anspruch 1, dadurch gekennzeichnet, daß der Schlitz (60) im Lagerring (50) radial verläuft.

3. Drehtisch nach Anspruch l oder 2, dadurch gekennzeichnet, der Schlitz (60) den Lagerring (50) durchtrennt.

4. Drehtisch nach Anspruch 1 oder 2, dadurch gekennzeichnet, daß der Schlitz (60) den Lagerring (50) nur teilweise durchtrennt.

5. Drehtisch nach einem der Ansprüche 1 bis 4, dadurch gekennzeichnet, daß der Schlitz (60) mit einer gummielastischen Masse ausgefüllt ist.

6. Drehtisch nach Anspruch 5, dadurch gekennzeichnet, daß die den Schlitz (60) ausfüllende Masse von einem in fließfähigem Zustand eingebrachten, elastisch abbindenden Kunststoff gebildet wird.

## Claims

1. Rotary table (10) with a stepped drive including a table plate (12) which is rotatably mounted by means of roller bearings on the upper surface of a housing (14) and projecting from whose underside there is a plurality of drive pegs (36), which are disposed at uniform angular spacings on the same diameter and which engage in a control groove (34) in a motor driven drive roller (32) mounted in the housing (14), the shape of the control groove (34) determining the characteristics of the rotary movement of the table plate (12), which is of circular shape and has a diameter which is larger than the associated upper region, which is also of circular shape and constitutes the bearing region (40), of the housing (14) and is thickened in the downward direction in the region (48) projecting radially beyond the housing such that it partially engages around the bearing region (40) of the housing (14) in the downward direction and releasably secured by fastening screws (52), provided substantially at uniform angular spacings, to the downwardly directed surface of the table plate edge region (48) engaging downwardly around the housing (14) in the bearing region there is a bearing ring (50), whereby formed in the radially outwardly directed wall of the housing (14) in the bearing region (40) there are the housing side races of the roller bearing (46) for the table plate (12) constituted by two wire rings (47) of hardened steel wire which are spaced in the vertical direction and arranged in a groove (42) in the upper bearing region (40) of the housing (14) and formed in the inner surface of the table plate (10), opposite to the races in the housing (14), and of the bearing ring (50) there are the races for the table plate side mounting of the roller bodies, which are constituted by two wire rings (56) of hardened steel wire, which are spaced in the vertical direction and which are arranged in a groove formed partially in the inner surface, directed towards the housing, of the annular projecting edge region (48) of the table plate (12) and partially in the bearing ring (50), characterised in that the bearing ring (50) is of more readily deformable construction, at least in a portion of its periphery, by virtue of a slot (60) in a perpendicular direction parallel to the axis of rotation of the table plate (12) than the region of the table plate (12) which is opposed to this region and adjacent in the radial direction to the edge region (48), which is thickened in the downward direction.

2. Rotary table as claimed in Claim 1, characterised in that the slot (60) extends radially in the bearing ring (50).

3. Rotary table as claimed in Claim 1 or 2, characterised in that the slot (60) cuts the bearing ring (50) into two.

4. Rotary table as claimed in Claim 1 or 2, characterised in that the slot (60) cuts only partially through the bearing ring (50).

5. Rotary table as claimed in one of Claims 1 to 4, characterised in that the slot (60) is filled with a rubber elastic composition.

6. Rotary table as claimed in Claim 5, characterised in that the composition filling slot (60) is constituted by an elastically setting plastic material introduced in the flowable state.

## Revendications

1. Table tournante (10) à commande pas à pas, comportant un plateau (12) qui est monté tournant par un roulement sur la face supérieure d'un carter (14) et de la face inférieure duquel font saillie plusieurs broches d'entraînement (36) placées à des distances angulaires égales sur un même cercle qui s'engagent dans une rainure de conduite (34) faite dans un rouleau d'entraînement (32) monté dans le carter (14) et entraîné par un moteur, l'allure de la rainure de conduite (34) déterminant la caractéristique du mouvement de rotation du plateau (12), qui est circulaire et de diamètre supérieur à celui de la partie supérieure associée, également circulaire, du carter (14) qui forme la zone d'appui (40), et est renforcé en épaisseur vers le bas dans sa zone (48) qui dépasse radialement du carter de façon à coiffer partiellement vers le bas la zone d'appui (40) du carter (14), et une bague de roulement (50) est fixée de manière démontable sur la face dirigée vers le bas de la zone de bord (48) du plateau qui coiffe le carter (14) vers le bas dans la zone d'appui par des vis de fixation (52) prévues sensiblement à des distances angulaires égales, dans la paroi dirigée radialement vers l'extérieur du carter (14) étant ménagés dans la zone d'appui (40) les chemins de roulement côté carter du roulement (46) pour le plateau (12), formés de deux anneaux (47) en fil d'acier trempé espacés en hauteur placés dans une gorge (42) ménagée dans la zone d'appui supérieure (40) du carter (14), et dans la face intérieure du plateau (12) et de la bague de roulement (50) opposée aux chemins de roulement ménagés dans le carter (14) étant faits les chemins de roulement pour l'appui côté plateau des corps roulants, lesquels chemins sont formés de deux anneaux (56) en fil d'acier trempé espacés en hauteur qui sont placés dans une gorge (54) ménagée en partie dans la face intérieure dirigée vers le carter de la zone de bord saillant annulairement (48) du plateau (12) et en partie dans la bague de roulement (50), caractérisée par le fait que la bague de roulement (50), au moins dans une partie de sa circonférence, est, par une fente (60), rendue plus facilement déformable dans la direction verticale, parallèle à l'axe de rotation du plateau (12), que la partie du plateau (12) opposée à ladite partie de circonférence et contiguë dans la direction radiale à la zone de bord (48) renforcée vers le bas.

2. Table tournante selon la revendication 1, caractérisée par le fait que la fente (60) s'étend radialement dans la bague de roulement (50).

3. Table tournante selon l'une des revendications 1 et 2, caractérisée par le fait que la fente (50) coupe la bague de roulement (50).

4. Table tournante selon l'une des revendications 1 et 2, caractérisée par le fait que la fente (60) coupe seulement partiellement la bague de roulement (50).

5. Table tournante selon l'une des revendications 1 à 4, caractérisée par le fait que la fente (60) est remplie d'une matière élastique.

6. Table tournante selon la revendication 5, caractérisée par le fait que la matière qui remplit la fente (60) est un plastique introduit à l'état fluide et élastique après prise.
